# EUROPÄISCHE PATENTSCHRIFT

(11) **EP 0 756 677 B1**
(45) Veröffentlichungstag und Bekanntmachung des Hinweises auf die Patenterteilung: **01.07.1998**
(21) Anmeldenummer: 95916661.2
(22) Anmeldetag: 15.04.1995
(51) Int. Cl.: F16H 61/06, F16D 48/06

(54) **DRUCKSTEUEREINRICHTUNG**
PRESSURE CONTROL DEVICE
SYSTEME DE COMMANDE DE LA PRESSION

(30) Priorität: 22.04.1994 DE 4414165
(43) Veröffentlichungstag der Anmeldung: 05.02.1997
(73) Patentinhaber: ZF FRIEDRICHSHAFEN Aktiengesellschaft, 88038 Friedrichshafen (DE)
(72) Erfinder: BOHNER, Ulrich, D-88690 Unteruhldingen (DE); BURKHART, Hugo, D-88213 Ravensburg (DE)
(86) Internationale Anmeldenummer: EP9501421
(87) Internationale Veröffentlichungsnummer: WO9529350

(56) Entgegenhaltungen:
- WO-A-84/00794
- WO-A-91/02913
- FR-A- 2 511 095
- US-A- 3 674 121
- US-A- 4 132 302
- US-A- 4 676 349

## Beschreibung

Die Erfindung betrifft eine Drucksteuereinrichtung zur Beeinflussung des Schließverhaltens von Lastschaltkupplungen in einem Lastschaltgetriebe, mit einem mit einer Dämpfereinrichtung zusammenwirkenden Regelventil als Drucksteuerventil, mit dem der Druckverlauf beim Einschalten der jeweiligen Kupplung festlegbar ist.

Aus der DE 21 20 545 ist eine Drucksteuereinrichtung für Gangschaltkupplungen in Kraftfahrzeugen bekannt.

Hierbei wird in einen Zwischenraum zwischen einem Hohlkolben und einem Steuerkolben Hydraulikflüssigkeit eingedrückt, so daß sich die genannten Kolben voneinander weg bewegen und somit die Drucksteuereinrichtung wieder in ihre Ausgangsstellung zurückbewegt werden kann.

Nachteilig an der Drucksteuereinrichtung gemäß der DE 21 20 545 ist jedoch, daß die Drucksteuereinrichtung noch nicht in ihre Ausgangslage zurückgesetzt ist, wenn zwei Kupplungen in kurzem, zeitlichen Abstand hintereinander geschaltet werden. Die Drucksteuerung der zweiten Kupplung beginnt daher an dem Punkt einer Modulationskurve, an dem sich der Druck in der Drucksteuereinrichtung zum Zeitpunkt des Betätigens der zweiten Kupplung befindet, und nicht, wie es für einen ruckfreien Schaltvorgang notwendig wäre, an einem definierten Punkt der Modulationskurve, da zum optimalen Schalten die gesamte Modulationskurve durchlaufen werden muß.

Der Druck der zweiten Kupplung wird daher nicht allmählich hochgesteuert, sondern springt sofort auf den momentan in der Drucksteuereinrichtung vorhandenen Druck, wodurch ein sogenannter Schaltstoß verursacht wird.

Ein weiterer Nachteil der in der genannten Druckschrift offenbarten Drucksteuereinrichtung ist die fehlende Möglichkeit einer Schnellbefüllung des Kupplungszylinders. Dieser Nachteil resultiert daraus, daß sich der Steuerkolben von seiner Ausgangsstellung, bei der die Steuerkante des Ventils den vollen Öffnungsquerschnitt zum Kupplungszylinder freigibt, in seine Drucksteuerstellung bewegt, bei der an der Steuerkante des Ventiles nur ein kleiner Drosselquerschnitt geöffnet ist, sobald der Druck hinter dem Drucksteuerventil und vor der Leitung zum Kupplungszylinder einen durch die Vorspannkraft einer Feder bestimmten Wert erreicht hat.

Dieser Druckwert ist relativ niedrig, wobei ab diesem Punkt der Kupplungszylinder nur noch gedrosselt befüllt wird, so daß der Befüllvorgang des Kupplungszylinders relativ lange dauert.

Um eine gute Schaltqualität zu erreichen, sollte die Befüllzeit jedoch möglichst kurz sein, damit der Kraftfluß im Antriebsstrang des Kraftfahrzeuges nur kurzfristig unterbrochen wird.

Der vorliegenden Erfindung liegt daher die Aufgabe zugrunde, eine Drucksteuereinrichtung vorzusehen, die die Nachteile des Standes der Technik beseitigt, insbesondere die ein schaltstoßfreies Schalten sowie eine Schnellbefüllung des Kupplungszylinders ermöglicht.

Erfindungsgemäß wird diese Aufgabe dadurch gelöst, daß über ein von einem Magnetventil geschaltetes erstes Schaltventil Druck in einen Raum C3 zwischen einem Verdrängerkolben und einem Druckregelkolben einsteuerbar ist, und über ein vom gleichen Magnetventil geschaltetes zweites Schaltventil ein Raum C2 hinter dem Verdrängerkolben entlüftbar ist, wobei der Druckregelkolben in seiner Ausgangsstellung zur Freigabe des vollen Ventilöffnungsquerschnittes von der Druckzuleitung zur Kupplungsleitung gehalten ist.

Durch die Möglichkeit, Druck in den Raum C3 zwischen Verdrängerkolben und Druckregelkolben einsteuern zu können, können der Verdrängerkolben und der Druckregelkolben sehr schnell wieder in ihre Ausgangsstellung zurückgebracht werden.

Dieses schnelle Zurückfahren des Verdrängerkolbens und des Regelkolbens in ihre Ausgangsstellung wird auch dadurch ermöglicht, daß der Raum hinter dem Verdrängerkolben entlüftbar ist, so daß der Verdrängerkolben gegen keinen großen Widerstand verschoben werden muß.

Aufgrund der Freigabe des vollen Ventilöffnungsquerschnittes von der Druckzuleitung zur Kupplungsleitung in der Ausgangsstellung des Druckregelkolbens kann der Kupplungszylinder schnell befüllt werden.

In vorteilhafter Weise kann das Magnetventil im Neutralzustand und bei geschaltetem Gang immer aktiviert sein, und das Magnetventil kann nach dem Einschalten einer neuen Kupplung noch eine bestimmte Zeit t_M6 lang aktiviert bleiben, und durch das Abschalten des Magnetventils über das erste Schaltventil kann der Raum C3 entlüftbar sein und der Raum C2 über das zweite Schaltventil mit einer Leitung C2E verbindbar sein, die über eine Blende mit der Kupplungsleitung verbunden ist.

Das Magnetventil ist hierbei nicht ständig aktiviert, sondern nur, so lange ein Gang geschaltet ist bzw. so lange der Gang, der gerade benutzt wird, eingelegt ist. Soll ein neuer Gang geschaltet werden, so ist das Magnetventil, vom Beginn des Schaltvorganges an gerechnet, noch für die Zeitdauer t_M6 aktiviert, so daß der anliegende Druck auf einem hohen Druckniveau verbleibt, um die Schnellbefüllung durchzuführen. Anschließend wird das Magnetventil so lange abgeschaltet, bis die Druckmodulation mit Sicherheit beendet ist.

Durch das Entlüften des Raums C3 über das erste Schaltventil kann der Verdrängerkolben möglichst schnell aus seiner Ausgangsstellung in seine Betätigungsstellung verfahren werden.

In einer vorteilhaften Ausführung der Drucksteuereinrichtung kann vorgesehen sein, daß zwischen dem Magnetventil und dem zweiten Schaltventil ein Drosselrückschlagventil angeordnet ist, das beim Aktivieren des Magnetventils den Ölstrom vom Magnetventil zum Schaltventil ungehindert durchläßt, jedoch beim Abschalten des Magnetventils den vom Schaltventil zum Magnetventil zurückfließenden Ölstrom drosselt.

Durch das Drosseln des vom Schaltventil zum Magnetventil zurückfließenden Ölstromes wird erreicht, daß sich das zweite Schaltventil verzögert in seine Ausgangs- bzw. Ruhelage zurückbewegt, während das zweite Schaltventil beim Einschalten des Magnetventils sofort in seine betätigte Position gesteuert werden kann, da in dieser Richtung über das Drosselrückschlagventil der volle Volumenstrom der Hydraulikflüssigkeit ungehindert fließen kann.

In einfacher Weise kann das Magnetventil sofort wieder aktivierbar sein, wenn während einer laufenden Druckmodulation eine neue Kupplung zugeschaltet wird.

Durch die sofortige Aktivierbarkeit des Magnetventils beim Zuschalten einer neuen Kupplung ist gewährleistet, daß die laufende Druckmodulation unterbrochen wird und eine neue Druckmodulation an einem definierten Punkt, der den Anfang der Druckmodulationskurve festlegt, neu beginnt. Hierdurch werden die Schaltstöße des Standes der Technik vermieden.

Für eine exakte Steuerung des Magnetventils ist eine Steuerungselektronik vorgesehen.

In vorteilhafter Weise kann die Zeit t_M6 variabel im Datenfeld der Steuerungselektronik programmiert sein und zusätzlich abhängig von der Öltemperatur und der Kupplungsdrehzahl veränderbar sein.

Wie bereits erwähnt, dient die Zeit t_M6 zum Durchführen der Schnellbefüllung des Kupplungszylinders.

Da diese Zeit abhängig ist von der Öltemperatur, welche die Viskosität der Hydraulikflüssigkeit beeinflußt, und von der Kupplungsdrehzahl, ist die Zeit t_M6 variabel vorgesehen, so daß sie an die genannten Parameter angepaßt werden kann.

Selbstverständlich kann die Zeit t_M6 von der Steuerungselektronik auch auf Null setzbar sein, wenn in äußerst kurzen Zeitabständen hintereinander die Kupplung betätigt wird, um zu verhindern, daß eine bereits (teil)gefüllte Kupplung nochmals befüllt wird.

In einer vorteilhaften Ausführungsform der Drucksteuereinrichtung kann vorgesehen sein, daß das Magnetventil nach Ablauf einer bestimmten Zeit t_Reaktivierung vom Schaltbeginn an wieder aktivierbar ist, wobei das Drucksteuerventil wieder in seine Ausgangslage steuerbar ist.

Mit dieser Ausführungsform wird zu Beginn einer neuen Schaltung keine Zeit verloren, um das System bzw. das Drucksteuerventil in Ausgangsstellung zurückzubringen.

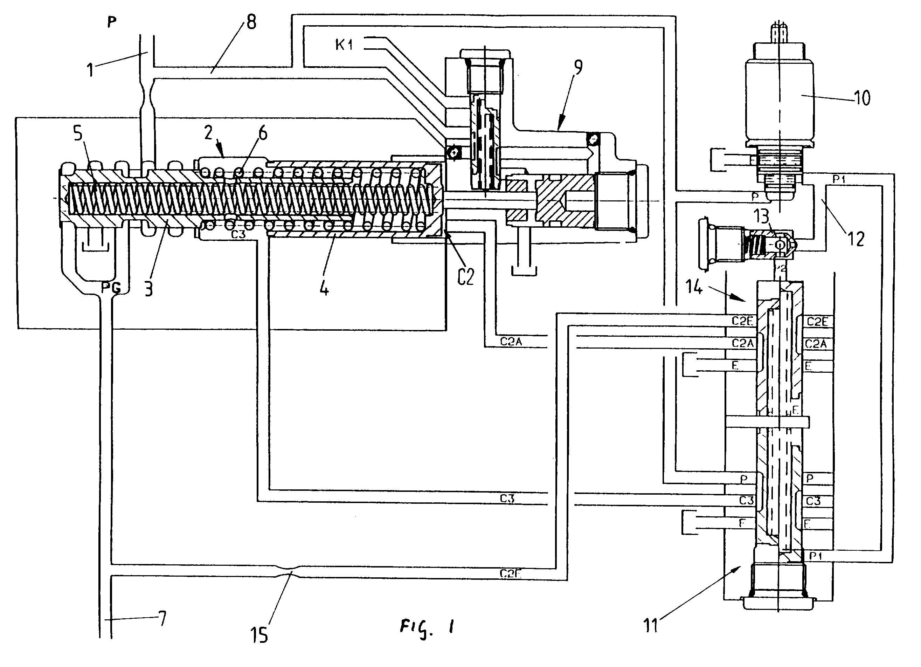

Nachfolgend ist anhand der Zeichnung ein Ausführungsbeispiel der vorliegenden Erfindung prinzipmäßig dargestellt.

In der Figur ist das Ölschema der erfindungsgemäßen Drucksteuereinrichtung dargestellt.

Eine Druckzuleitung 1 führt von einer Pumpe zu einem Drucksteuerventil 2. Im Innern des Drucksteuerventils sind ein Druckregelkolben 3 sowie ein Verdrängerkolben 4 linear und koaxial zueinander verschiebbar angeordnet. Der Verdrängerkolben 4 ist hierbei als Hohlkolben ausgebildet. Durch zwei Druckfedern 5, 6 werden sowohl der Verdrängerkolben 4 als auch der Druckregelkolben 3 in eine Ausgangsposition innerhalb des Drucksteuerventils 2 gedrückt, wobei die Druckfedern 5, 6 so angeordnet sind, daß der Druckregelkolben 3 nach links gedrückt ist, während der Verdrängerkolben 4 von der Druckfeder 6 nach rechts gedrückt ist.

Zwischen dem Druckregelkolben 3 und dem Verdrängerkolben 4 ist innerhalb des Drucksteuerventils 2 ein Raum C3 ausgebildet, in den Hydraulikflüssigkeit einfließen kann.

Von dem Drucksteuerventil 2 aus führt eine Kupplungsleitung 7 zu den nicht dargestellten Kupplungen des Getriebes.

Vor dem Eintritt in das Drucksteuerventil 2 zweigt aus der Druckzuleitung 1 eine Leitung 8 ab. Ein Ast der Leitung 8 führt hierbei in ein Zwei-Druckstufenventil 9, während ein anderer Ast der Leitung 8 zu einem Magnetventil 10 und zu einem ersten Schaltventil 11 führt. Von dem ersten Schaltventil 11 aus wiederum kann Hydraulikflüssigkeit in den Raum C3 im Drucksteuerventil 2 gefördert werden.

Durch das Zwei-Druckstufenventil 9 kann die Vorspannung der Druckfedern 5, 6 erhöht werden.

Von dem Magnetventil 10 aus führt eine Leitung 12 zu einem Drosselrückschlagventil 13. Das Drosselrückschlagventil 13 ist direkt mit einem zweiten Schaltventil 14 über eine Leitung P2 verbunden.

Sowohl das erste Schaltventil 11 als auch das zweite Schaltventil 14 sind als sogenannte Schieberventile ausgebildet.

Von der Kupplungsleitung 7 aus zweigt eine Leitung C2E zu dem zweiten Schaltventil 14 ab. Eine weitere Leitung C2A verbindet das zweite Schaltventil 14 mit dem Drucksteuerventil 2, genauer gesagt mit dem Raum hinter dem Verdrängerkolben 4.

Das Magnetventil 10 wird von einer nicht dargestellten Elektronik gesteuert.
Wird die Elektronik eingeschaltet, d. h. mit Betriebsspannung versorgt, dann aktiviert sie sofort das Magnetventil 10. Im Magnetventil ist dann die Ausgangsleitung P1 mit der Druckversorgung P (Leitung 8) verbunden. Hierdurch kann Hydraulikflüssigkeit mit einem Druck p von der Druckzuleitung 1 über die Leitung 8 und durch das Magnetventil 10 hindurch durch eine Leitung P1 zu dem ersten Schaltventil 11 sowie über eine Leitung 12 durch das Drosselrückschlagventil 13 hindurch zu dem zweiten Schaltventil 14 fließen, wodurch sowohl das erste Schaltventil 11 als auch das zweite Schaltventil 14 betätigt werden.

Beim Betätigen des ersten Schaltventils 11 kann die mit einem Druck p beaufschlagte Hydraulikflüssigkeit in den Raum C3 des Drucksteuerventils 2 fließen. Durch den in dem Raum C3 steigenden Druck werden sowohl der Druckregelkolben 3 als auch der Verdrängerkolben 4 linear voneinander weg verschoben. Sowohl der Druckregelkolben 3 als auch der Verdrängerkolben 4 befinden sich nun an ihrem linken bzw. rechten Anschlag im Drucksteuerventil 2.

Der Druckregelkolben 3 gibt in dieser Stellung den vollen Strömungsquerschnitt am Drucksteuerventil 2 zwischen dem Druck p, der auch als Systemdruck bezeichnet werden kann, in der Druckzuleitung 1 und einem gesteuerten Druck p_g in der Kupplungsleitung 7 frei, so daß Öl mit Systemdruck in die Kupplungen fließen kann und somit eine Schnellbefüllung der Kupplungen realisiert ist.

Damit der Verdrängerkolben 4 möglichst schnell in seine rechte Anschlagposition verfahren werden kann, wenn sich im Raum C3 im Drucksteuerventil 2 ein Druck aufbaut, wird über die Leitung C2A der Raum hinter dem Verdrängerkolben 4 entlüftet. Diese Entlüftung erfolgt durch das Betätigen des zweiten Schaltventils 14 über das Magnetventil 10.

Das Magnetventil 10 bleibt für eine bestimmte, voreingestellte Zeit t_M6 aktiviert. Während dieser Zeit bleibt der Strömungsquerschnitt zwischen der Druckzuleitung 1 und der Kupplungsleitung 7 ganz geöffnet. Die Kupplung wird hierbei mit maximalem Druck und maximaler Ölmenge befüllt.

Die Zeit t_M6 ist dabei so eingestellt, daß einerseits eine vollständige Füllung des Kupplungszylinders sichergestellt ist, andererseits aber kein Drehmomentaufbau während des Befüllens des Kupplungszylinders eintreten kann. Der Wert für die Zeit t_M6 ist daher von der Größe der Kupplung, der Temperatur der Hydraulikflüssigkeit und der Drehzahl des Antriebsstranges der Antriebseinrichtung des Fahrzeuges abhängig.

Ist die Zeit t_M6 abgelaufen, wird das Magnetventil 10 abgeschaltet. Das erste Schaltventil 11 kehrt hierbei in seine ursprüngliche Stellung zurück, die in der Figur durch die rechte Hälfte des Kolbens des ersten Schaltventils 11 dargestellt ist.

Die Leitung C3 zwischen dem Spreizventil 2 und dem ersten Schaltventil 11 wird hierbei mit einer Entlüftungsleitung E verbunden, welche zum Tank der Hydraulikflüssigkeit führt.

Wird das Magnetventil 10 geschlossen, so verringert sich auch langsam der Druck in der Leitung P1 zwischen dem Magnetventil 10 und dem ersten Schaltventil 11. Gleichzeitig beginnt sich auch der Betätigungsdruck in der Leitung P2 zwischen dem Drosselrückschlagventil 13 und dem zweiten Schaltventil 14 zu vermindern. Durch die Drossel des Drosselrückschlagventils 13 fließt das Öl langsam ab. Aufgrund des durch die Drossel des Drosselrückschlagventils 13 begrenzten Ölflusses geht das zweite Schaltventil 14 mit einer Zeitverzögerung gegenüber dem ersten Schaltventil 11 in seine ursprüngliche Stellung zurück (siehe rechte Hälfte des Kolbens des zweiten Schaltventils 14 in der Figur). Der Wert der Zeitverzögerung beträgt in dem vorliegenden Ausführungsbeispiel ungefähr 0,1 sec und wird als sogenannte Füllausgleichszeit bezeichnet. Hierdurch ist sichergestellt, daß der Kupplungszylinder ordnungsgemäß gefüllt ist und daß sich der Druck der Hydraulikflüssigkeit auf dem Niveau des Anfangsdruckes der Modulation befindet, bevor Öl über die Leitung C2A fließt und somit der modulierte Druckanstieg beginnt.

Zu Beginn des modulierten Druckanstiegs bewegt sich der Druckregelkolben 3 nach rechts und schließt hierbei beinahe den Strömungsquerschnitt zwischen der Druckzuleitung 1 und der Kupplungsleitung 7. Entsprechend der Federkraft der Druckfedern 5, 6 regelt sich in der Kupplungsleitung 7 ein Druck p_g ein. Der Ölfluß durch die Leitung C2E und eine in der Leitung C2E angeordnete Blende 15 sowie durch das zweite Schaltventil 14 hindurch verschiebt den Verdrängerkolben 4 im Drucksteuerventil 2 nach links, wodurch die Druckfedern 5, 6 zusammengepreßt werden, was dazu führt, daß der Druck p_g linear mit dem Weg des Verdrängerkolbens ansteigt.

Am Ende seiner linearen Verschiebung trifft der Verdrängerkolben 4 auf den Druckregelkolben 3 und schiebt diesen zu seinem linken Anschlag innerhalb des Drucksteuerventils 2, so daß der Druck p_g sofort auf den Systemdruck p ansteigt, da nunmehr von dem Druckregelkolben 3 der volle Ventilöffnungsquerschnitt zwischen der Druckzuleitung 1 und der Kupplungsleitung 7 freigegeben ist.

Nach dem Ablauf einer vorab eingestellten Reaktivierungszeit t_Reaktivierung wird das Magnetventil 10 erneut betätigt, wobei die Leitung C2A, wie beschrieben, entlüftet wird und der Raum C3 im Steuerventil 2 zwischen dem Druckregelkolben 3 und dem Verdrängerkolben 4 wieder mit Systemdruck p beaufschlagt wird. Dadurch wird der Verdrängerkolben 4 zu seinem rechten Anschlag zurückgeschoben.

Die gesamte Drucksteuereinrichtung ist somit für ein weiteres Befüllen der Kupplung in ihre Ausgangslage zurückgestellt.

Die Zeit t_Reaktivierung ist etwas länger als die normale Modulationszeit, die ungefähr 1,6 sec beträgt.

Im Falle eines Kaltstarts ist die Viskosität der Hydraulikflüssigkeit relativ hoch. Dies führt zu einer sehr langen Modulationszeit und somit zu einer langen Kupplungsrutschzeit. Durch diese lange Kupplungsrutschzeit können die Kupplungsbeläge beschädigt werden. Durch eine Reaktivierung des Magnetventils 10 wird in diesem Fall die Kupplung geschlossen, so daß hierdurch die Kupplungsrutschzeit begrenzt wird.

Soll durch einen neuen Schaltvorgang eine Kupplung geschaltet werden, die vor dem letzten Schaltvorgang bereits benutzt wurde, so sind die Kupplungszylinder und Leitungen der Kupplung für eine gewisse Zeit noch weitgehend gefüllt.

In diesem Fall wäre eine Schnellbefüllung der Kupplungszylinder ungünstig, so daß die Schnellfüllphase unterdrückt wird, wenn eine solche Schaltung in der Schnellfüllunterdrückungszeit t_Schnellfüllunterdrückung auftritt. Die Zeit t_M6 wird dann von der Steuerungselektronik auf Null gesetzt, so daß eine Schnellbefüllung verhindert wird.

Tritt ein neuer Schaltvorgang noch vor der Rückstellung der erfindungsgemäßen Drucksteuereinrichtung auf, so wird das Magnetventil 10 sofort aktiviert, um die Drucksteuereinrichtung zurückzustellen. Hierdurch wird eine unmodulierte Schaltung und somit ein Schaltstoß verhindert.

Da jedoch zusätzlich Zeit benötigt wird, um den Verdrängerkolben 4 in seine Ausgangslage zurückzuschieben, bleibt das Magnetventil 10 für eine bestimmte Zeit eingeschaltet, die als Baumannzeit t_Baumann bezeichnet wird. Der Wert dieser Zeit beträgt ca. 0,1 sec.

Zusätzlich sind während der Zeit t_Baumann die Wendekupplungen des Fahrzeuges ausgeschaltet, um eine Drehmomentspitze am Getriebeabtrieb des Antriebsstranges zu verhindern, falls die Kupplung bereits vor Ablauf der Zeit t_Baumann vollständig gefüllt ist.

Die beschriebene Funktion ist aktiv, wenn die neue Betätigung der Kupplung vor Ablauf der Rückstellsteuerzeit auftritt, wobei sich die Rückstellsteuerzeit t_Rückstellsteuerung als Summe der Zeiten t_Reaktivierung und t_Baumann ergibt.

### Bezugszeichen

- 1: Druckzuleitung
- 2: Drucksteuerventil
- 3: Druckregelkolben
- 4: Verdrängerkolben
- 5: Druckfeder
- 6: Druckfeder
- 7: Kupplungsleitung
- 8: Leitung
- 9: Zwei-Druckstufenventil
- 10: Magnetventil
- 11: erstes Schaltventil
- 12: Leitung
- 13: Drosselrückschlagventil
- 14: zweites Schaltventil
- 15: Blende

- C2: Raum hinter Verdrängerkolben

## Patentansprüche

1. Drucksteuereinrichtung zur Beeinflussung des Schließverhaltens von Lastschaltkupplungen in einem Lastschaltgetriebe, mit einem mit einer Dämpfereinrichtung zusammenwirkenden Regelventil als Drucksteuerventil (2), mit dem der Druckverlauf beim Einschalten der jeweiligen Kupplung festlegbar ist, dadurch **gekennzeichnet,** daß über ein von einem Magnetventil (10) geschaltetes erstes Schaltventil (11) Druck in einen Raum (C3) zwischen einem Verdrängerkolben (4) und einem Druckregelkolben (3) einsteuerbar ist, und über ein vom gleichen Magnetventil (10) geschaltetes zweites Schaltventil (14) ein Raum (C2) hinter dem Verdrängerkolben (4) entlüftbar ist, wobei der Druckregelkolben (3) in seiner Ausgangsstellung zur Freigabe des vollen Ventilöffnungsquerschnittes von der Druckzuleitung (1) zur Kupplungsleitung (7) gehalten ist.

2. Drucksteuereinrichtung nach Anspruch 1, dadurch **gekennzeichnet,** daß das Magnetventil (10) im Neutralzustand und bei geschaltetem Gang immer aktiviert ist, und daß das Magnetventil (10) nach dem Einschalten einer neuen Kupplung noch eine bestimmte Zeit t_M6 lang aktiviert bleibt, und daß durch das Abschalten des Magnetventils (10) über das erste Schaltventil (11) der Raum (C3) entlüftbar ist, und der Raum (C2) über das zweite Schaltventil (14) mit einer Leitung (C2E) verbindbar ist, die über eine Blende (15) mit der Kupplungsleitung (7) verbunden ist.

3. Drucksteuereinrichtung nach Anspruch 1 und 2, dadurch **gekennzeichnet,** daß zwischen dem Magnetventil (10) und dem zweiten Schaltventil (14) ein Drosselrückschlagventil (13) angeordnet ist, das beim Aktivieren des Magnetventils (10) den Ölstrom vom Magnetventil (10) zum zweiten Schaltventil (14) ungehindert durchläßt, jedoch beim Abschalten des Magnetventils (10) den vom zweiten Schaltventil (14) zum Magnetventil (10) zurückfließenden Ölstrom drosselt.

4. Drucksteuereinrichtung nach Anspruch 1 bis 3, dadurch **gekennzeichnet,** daß das Magnetventil (10) sofort wieder aktivierbar ist, wenn während einer laufenden Druckmodulation eine neue Kupplung zugeschaltet wird.

5. Drucksteuereinrichtung nach Anspruch 1 bis 4, dadurch **gekennzeichnet,** daß das Magnetventil (10) durch eine Steuerungselektronik gesteuert ist.

6. Drucksteuereinrichtung nach Anspruch 1 bis 5, dadurch **gekennzeichnet,** daß die Zeit t_M6 variabel im Datenfeld der Steuerungselektronik programmiert ist und zusätzlich abhängig von der Öltemperatur und der Kupplungsdrehzahl veränderbar ist.

7. Drucksteuereinrichtung nach Anspruch 1 bis 6, dadurch **gekennzeichnet,** daß die Zeit t_M6 von der Steuerungselektronik auf Null setzbar ist.

8. Drucksteuereinrichtung nach Anspruch 1 bis 7, dadurch **gekennzeichnet,** daß das Magnetventil (10) nach Ablauf einer bestimmten Zeit t_Reaktivierung vom Schaltbeginn an wieder aktivierbar ist, wobei das Drucksteuerventil (2) wieder in seine Ausgangslage steuerbar ist.

## Claims

1. A pressure control device used to influence the closing behaviour of power shift clutches in a power shift transmission with a control valve cooperating with a damping device as the pressure control valve (2), by means of which the pressure cycle can be set on engaging the clutch concerned **characterized** in that the pressure in a chamber (C3) between a displacement piston (4) can be controlled via a first shifting valve (11) switched by a solenoid valve (10), and a chamber (C2) behind the displacement piston (4) can be vented by the same solenoid valve (10), whereby the pressure control piston (3) is held in its initial position to fully release the valve aperture cross-section from the pressure line (1) to the clutch line (7).

2. A pressure control device according to claim 1 **wherein** the solenoid valve (10) is continually active in neutral position and with a gear engaged, and the solenoid valve (10) remains active for a certain time t_M6 after a new clutch has been engaged and chamber (C3) can be vented via the first shift valve switched by the solenoid valve (10), and the chamber (C2) can be connected via the second shift valve (14) with a line (C2E) which is connected via an orifice (15) with the clutch line (7).

3. A pressure control device according to claims 1 and 2 **wherein** a throttle check valve (13) arranged between the solenoid valve (10) and the second shift valve (14) allows the oil to flow freely from the solenoid valve (10) to the second shift valve (14) when the solenoid valve is activated, and it reduces the oil flow from the shift valve (14) to the solenoid valve (10), when the solenoid valve (10) is deactivated

4. A pressure control device according to claims 1 to 3, **wherein** the solenoid valve (10) can be immediately reactivated if a new clutch is engaged during active pressure modulation.

5. A pressure control device according to claims 1 to 4, **wherein** the solenoid valve (10) is controlled by an electronic control unit (ECU).

6. A pressure control device according to claims 1 to 5, **wherein** the time t_M6 is variably programmed into the data set of the electronic control unit and can furthermore be changed as a function of the oil temperature and the clutch speed.

7. A pressure control device according to claims 1 to 6, **wherein** time t_M6 can be set to zero by the electronic control unit.

8. A pressure control device according to claims 1 to 7, **wherein** the solenoid valve (10) can be reactivated after a certain reactivating time t_from shift start, and where the pressure control valve (2) can be reset to its original position.

## Revendications

1. Système de commande de pression pour influencer le comportement de serrage d'embrayages en charge dans une boite de vitesses en charge, comprenant une vanne de réglage, sous la forme d'une vanne de commande de pression (2), qui coopère avec un dispositif d'amortissement et avec laquelle l'allure de la pression peut être déterminée lors de l'enclenchement de l'embrayage respectif, caractérisé en ce que de la pression peut être injectée, par une première vanne d'enclenchement (11) enclenchée par une vanne magnétique (10), dans une chambre (C3) entre un piston de refoulement (4) et un piston de réglage (3) et en ce qu'une chambre (C2), derrière le piston de refoulement (4), peut être purgée d'air par une seconde vanne d'enclenchement (14) enclenchée par la même vanne magnétique (10), le piston de réglage de pression (3) étant retenu dans sa position de départ pour la libération de la section transversale complète d'ouverture de vanne entre la conduite d'amenée de pression (1) et la conduite de l'embrayage (7).

2. Système de commande de pression suivant la revendication 1, caractérisé en ce que la vanne magnétique (10) est toujours activée au point mort et dans le cas d'une vitesse enclenchée et en ce que la vanne magnétique (10) reste activée pendant encore un temps déterminé et t_M6 et après l'enclenchement d'un nouvel embrayage et en ce que, par la désexcitation de la vanne magnétique (10), la chambre (C3) peut être purgée d'air par l'intermédiaire de la première vanne d'enclenchement (11) et la chambre (C2) peut être reliée par la seconde vanne d'enclenchement (14) à une conduite (C2E) qui est reliée à la conduite d'embrayage (7) par l'intermédiaire d'une ouverture (15).

3. Système de commande de pression suivant la revendication 1 ou 2, caractérisé en ce qu'entre la vanne magnétique (10) et la seconde vanne d'enclenchement (14) il est agencé une soupape d'étranglement à anti-retour (13) qui laisse passer sans empêchement l'écoulement d'huile depuis la vanne magnétique (10) jusqu'à la seconde vanne d'enclenchement (14) lors de l'activation de la vanne magnétique (10) mais qui, lors de la désexcitation de la vanne magnétique (10), étrangle l'écoulement d'huile qui s'écoule en retour de la seconde vanne d'enclenchement (14) vers la vanne magnétique (10).

4. Système de commande de pression suivant l'une des revendications 1 à 3, caractérisé en ce que la vanne magnétique (10) peut être à nouveau activée dès qu'un nouvel embrayage est enclenché pendant qu'une modulation de pression est en cours.

5. Système de commande de pression suivant l'une des revendications 1 à 4, caractérisé en ce que la vanne magnétique (10) est commandée par un moyen électronique de commande.

6. Système de commande de pression suivant l'une des revendications 1 à 5, caractérisé en ce que le temps t_M6 est programmé de manière variable dans une zone de données du moyen électronique de commande et peut être modifié en plus en fonction de la température d'huile et de la vitesse de rotation de l'embrayage.

7. Système de commande de pression suivant l'une des revendications 1 à 6, caractérisé en ce que le temps t_M6 peut être réglé à zéro par le moyen électronique de commande.

8. Système de commande de pression suivant l'une des revendications 1 à 7, caractérisé en ce que la vanne magnétique (10) peut être activée à nouveau après l'écoulement d'un temps déterminé t_réactivation à partir du début de l'enclenchement, la vanne de commande de pression (2) pouvant être amenée à nouveau dans ses conditions de départ.
